(19)

**Europäisches Patentamt**
**European Patent Office**
**Office européen des brevets**

(11) **EP 3 248 307 B1**

(12) **EUROPEAN PATENT SPECIFICATION**

(45) Date of publication and mention
of the grant of the patent:
**10.04.2019 Bulletin 2019/15**

(21) Application number: **15704538.6**

(22) Date of filing: **13.02.2015**

(51) Int Cl.:
**H04B 10/61** (2013.01)       **H04L 1/20** (2006.01)
**H04L 27/26** (2006.01)

(86) International application number:
**PCT/EP2015/053079**

(87) International publication number:
**WO 2016/128065 (18.08.2016 Gazette 2016/33)**

(54) **SAMPLING PHASE SELECTION IN AN OPTICAL RECEIVER**

ABTASTPHASENAUSWAHL BEI EINEM OPTISCHEN EMPFÄNGER

SÉLECTION DE PHASE D'ÉCHANTILLONNAGE DANS UN RÉCEPTEUR OPTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.11.2017 Bulletin 2017/48**

(73) Proprietor: **Huawei Technologies Co., Ltd.
Longgang District
Shenzhen, Guangdong 518129 (CN)**

(72) Inventor: **STOJANOVIC, Nebojsa
80992 Munich (DE)**

(74) Representative: **Gill Jennings & Every LLP
SAH
The Broadgate Tower
20 Primrose Street
London EC2A 2ES (GB)**

(56) References cited:
**EP-A1- 1 443 697       WO-A2-2010/045157
US-B2- 8 068 572**

- **MOELLER L ET AL: "MAXIMUM-LIKELIHOOD
OPTIMAL-SAMPLING-PHASE ESTIMATION FOR
ULTRA-HIGH-SENSITIVITY OPTICALLY
PREAMPLIFIED DUOBINARY RECEIVERS",
JOURNAL OF LIGHTWAVE TECHNOLOGY, IEEE
SERVICE CENTER, NEW YORK, NY, US, vol. 23,
no. 1, 1 January 2005 (2005-01-01), pages 159-164,
XP001227318, ISSN: 0733-8724, DOI:
10.1109/JLT.2004.840360**
- **ALFIAD M ET AL: "A DPSK Receiver With
Enhanced CD Tolerance Through Optimized
Demodulation and MLSE", IEEE PHOTONICS
TECHNOLOGY LETTERS, IEEE SERVICE
CENTER, PISCATAWAY, NJ, US, vol. 20, no. 10,
15 May 2008 (2008-05-15), pages 818-820,
XP011207774, ISSN: 1041-1135**

**Description**

**FIELD OF THE INVENTION**

The invention is related to direct detection optical receivers generally, and more particularly to optical receivers using enhanced digital equalizers for chromatic dispersion compensation.

**BACKGROUND OF THE INVENTION**

Many 10Gb/s optical transmission systems using the third window (wavelengths around 1550 nm) for transmitting data over optical fibers are deployed in dispersion compensated links. These dispersion compensated links may include dispersion compensating fibers (DCF) which correct for chromatic dispersion (CD) in the transmitted signal as it travels along an optical fiber and which may affect the transmitted data by broadening the signal. The optical fibers used for data transmission typically have a dispersion coefficient close to 16ps/(nm.km). Generally, the DCFs have opposite dispersion sign than the optical fibers through which the data is transmitted and, as they are normally shorter than one optical span (~80km), have a higher dispersion coefficient. Using DCF causes negative effects, such as, for example, higher noise, nonlinear effects, and demand for greater power requirements.

In the last years, attempts are being made to have 40 and 100Gb/s optical transmission systems deployed without DCFs. These systems generally employ coherent detection and use digital signal processing (DSP) to compensate for the chromatic dispersion. Nevertheless, these optical transmission systems are very expensive. In shorter optical links without DCF, it is generally not economical to deploy such expensive systems.

Several known techniques for transmitting 10Gb/s data over CD uncompensated optical links focus on improving performance on the transmitting side of the optical transmission system. These techniques may include use of an On-off keying signal (OOK), a Duobinary transmitter, or a Chirped modulated laser. On the receiving side of the transponder, the equalizer may include a feed-forward equalizer (FFE), a decision feed-back equalizer (DFE), a maximum likelihood sequence estimator (MLSE), or any combination thereof.

Some transmissions systems may use on the transmitter side a distributed feedback laser (DFB) together with an electro-absorption modulator (EAM) integrated in transmit optical subassemblies (TOSA). The power of the optical signal may be substantially proportional to the electrical signal modulating the laser. On the receiver side, a photo diode (PD) may detect the optical signal, with the output of the photo diode substantially proportional to the optical signal power. The photo diode may be, for example, a positive-intrinsic-negative (PIN) diode or an avalanche photo diode. The photo diode output may be amplified using a trans-impedance amplifier (TIA). The photo diode and TIA can be integrated in receive optical subassemblies (ROSA) that may include an automatic gain control circuit (AGC) to adjust electrical signal to an analog-to-digital (ADC) input when electronic equalization is used.

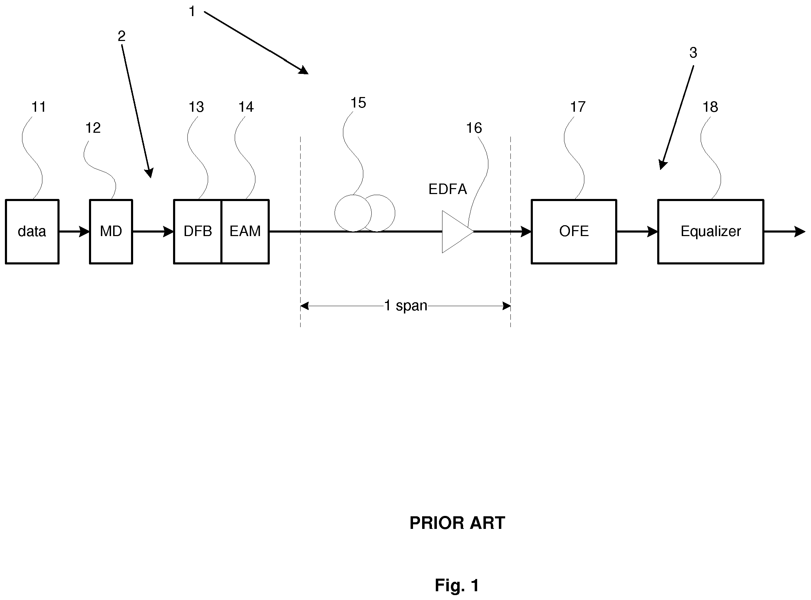

A typical 10Gb/s optical transmission system 1 is presented in Fig. 1. On the transmission side 2, data 11 may be amplified using a modulator driver (MD) 12. DFB 13 and EAM 14 are responsible for modulation. Optical signal may be transmitted over several spans consisting of fiber 15 and erbium-doped fiber amplifier 16. On the receiver side 3, an optical front end (OFE) 17 includes a photo detector and amplifier, and may be integrated in ROSA. Signal suffering from CD, PMD, and electrical bandwidth limitations may be equalized in an equalizer 18 using FIR, DFB, MLSE, or any combination thereof.

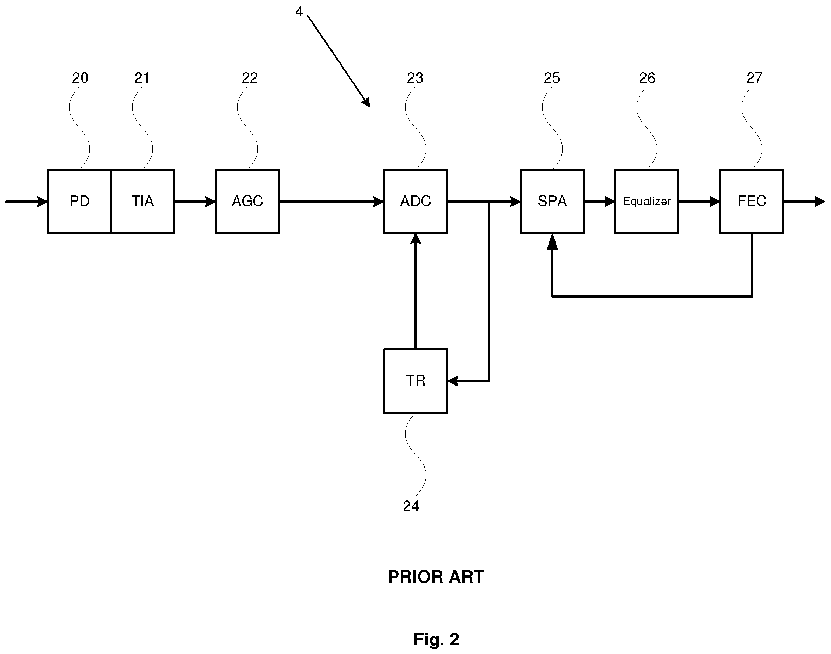

A typical optical receiver 4 (on receiver side 3) is shown in Fig. 2. The received optical signal may be received by a photo diode (PD) 20 and its output amplified by TIA 21. An automatic gain control (AGC) 22 may monitor signal power variations and may produce an almost constant signal swing that may fit into an analog/digital converter (ADC) 23 input range to prevent the signal from being clipped or strongly attenuated. Equalization circuitry 26 may recover the signal suffering from noise and intersymbol interference (ISI). Prior to equalizing, a local oscillator may be locked to the input signal, i.e. to the transmitter oscillator responsible for data clocking (the two oscillators must be substantially synchronized). Clock extraction may be enabled by a phase detector (PD) that may output information whether a sampling clock is higher or lower. Since this information may be noisy due to pattern-dependent noise, amplifier noise, component imperfections, among other noise sources, timing information may be filtered before entering the receiver oscillator, often realized as voltage-controlled oscillator (VCO).

Timing information can be derived from an ADC output signal. A timing recovery circuit (TR) 24 may include the PD, a filter, and the VCO. VCO clock phase may be adjusted using sampling phase adjustment circuit (SPA) 25. Sampling phase optimization may be supported by a forward error correction circuit (FEC) 27 that may correct a number of FEC input errors.

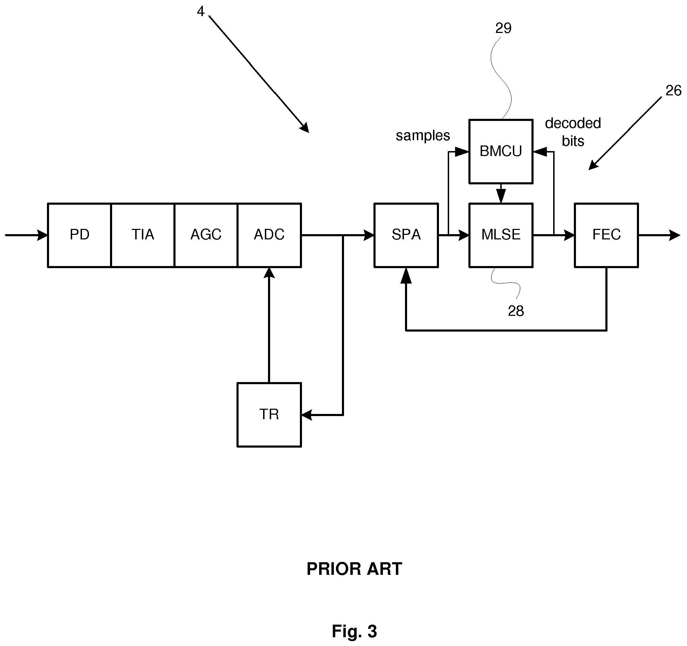

An MLSE equalizer may provide a more superior performance among all the aforementioned equalization techniques. Fig. 3 schematically illustrates optical receiver 4 with equalization circuitry 26 including an MLSE equalizer 28. Generally, the Viterbi algorithm may be used for MLSE equalization. The MLSE complexity may grow exponentially with channel memory, and may be equal to the number of symbol intervals over which an isolated symbol may be spread to achieve superior equalizer performance.

Two methods are typically used for updating metrics in an MLSE equalizer; blind and training. The training method uses a known symbol sequence to learn the channel. This introduces additional redundancy and requires enhanced synchronization algorithms. In severely distorted channels, using training symbols is extremely difficult, if not almost impossible. Therefore, blind methods are preferable for critically distorted channels. The blind method uses a starting channel model from which MLSE equalizer 28 roughly equalizes the distorted signal.

To calculate the metrics in MLSE equalizer 28, a Branch Metric Calculation Unit (BMCU) 29 may be included in equalization circuitry 26. Branch metric calculation may be based on histograms or mean values. In the histograms-based method a probability density function (pdf) for each symbol pattern is estimated. The logarithm of pdf may then be used to calculate branch metrics. In the mean values method, simple Euclidian distance metrics may be utilized, and a normal noise distribution is assumed.

US 8,068,572 relates to a self-timing method for phase adjustment for the case of two samples per symbols. An analog signal is digitized at a first and second phase with respect to the symbols comprised in an analog signal in order to obtain first and second quantized samples. Then a first counter out of a first plurality of counters is increased if said first quantized sample has a first digital value to which said first counter is associated. Moreover a second counter out of a second plurality of counters is increased if a second quantized sample has a second digital value to which the second counter is associated. Finally the sampling phase is adjusted based on the values of the counters of the first and second plurality of counters. Moreover a digitizing, self-timing circuit is disclosed.

EP 1443697 A1 describes a method for error rate estimation.

The Applicant has realized that the performance of optical receivers using enhanced equalizers to compensate for ISI in CD distorted channels may be substantially improved by using a sampling phase estimator which may adjust a sampling phase of the data input to an equalizer and may determine an optimal sampling phase from the adjusted sampling phases and from metrically decoded data output from the equalizer for each adjusted sampling phase. The estimator, which may include an interpolator, may estimate for each adjusted sampling phase a parameter sampling phase quality indicator (SPQI), and select as the optimal sampling phase the adjusted sampling phase having the highest SPQI. The process of calculating an SPQI for each adjusted sampling phase may be an iterative process, which may be carried out in M steps (M sampling phases) per UI (UI/M) where the sampling phase is adjusted at each step, and may be carried out over N UI. The interpolator may output information associated with the optimal sampling phase to a SPA circuit which may correct a phase of a VCO clock in a timing recovery circuit to the optimal sampling phase. In some embodiments, the interpolator may be included in the SPA circuit. Interpolation techniques used by the interpolator may include, for example, cubic spline interpolation, among other suitable interpolation techniques.

## SUMMARY

The foregoing and other objects are achieved by the features of the independent claims. Further implementation forms are apparent from the dependent claims, the description and the figures.

Aspects of the invention are set out in the claims.

## BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:

Fig. 1 schematically illustrates a block diagram of a typical 10Gb/s optical transmission system;

Fig. 2 schematically illustrates a block diagram of a typical optical receiver;

Fig. 3 schematically illustrates a block diagram of a typical optical receiver including a MLSE (maximum likelihood sequence estimator) equalizer and a BMC (branch metric calculation) unit (BMCU);

Fig. 4 is a graph showing simulation results of using an MLSE equalizer to compensate for ISI (intersymbol interference) on a CD (chromatic dispersion) distorted channel for different sampling phases;

Fig. 5 schematically illustrates a section of the optical receiver shown in Fig. 3, and including sampling phase adjustment circuitry (SPA) and equalization circuitry suitable for determining and selecting an optimal sampling phase, according to an embodiment of the present invention;

Fig. 6 schematically illustrates an implementation of the section of the optical receiver shown in Fig. 5 according to a further embodiment of the present invention;

Fig. 7 is a flow chart of a method for selecting the optimal sampling phase in an optical receiver using a MLSE equalizer, a BMCU, and a best sampling phase estimator (BSPE), according to an embodiment of the present invention;

Fig. 8 schematically illustrates a block diagram of an optical transmission system test set-up, according to an embodiment of the present invention;

Fig. 9 shows a graph of SPQI (sampling phase quality indicator) vs. sampling phase for a 64-state MLSE with one sample per symbol, according to an embodiment of the present invention;

Fig. 10 shows a graph of BER (bit error rate) vs. sampling phase for a 64-state MLSE with one sample per symbol, according to an embodiment of the present invention;

Fig. 11 shows a graph of SPQI vs. sampling phase for a 64-state MLSE with two samples per symbol, according to an embodiment of the present invention;

Fig. 12 shows a graph of BER vs. sampling phase for a 64-state MLSE with two samples per symbol, according to an embodiment of the present invention;

Fig. 13 shows a graph of SPQI vs. sampling phase for a 16-state MLSE with one sample per symbol, according to an embodiment of the present invention;

Fig. 14 shows a graph of BER vs. sampling phase for a 16-state MLSE with one sample per symbol, according to an embodiment of the present invention;

Fig. 15 shows a graph of SPQI vs. sampling phase for a 16-state MLSE with two samples per symbol, according to an embodiment of the present invention; and

Fig. 16 shows a graph of BER vs. sampling phase for a 16-state MLSE with two samples per symbol, according to an embodiment of the present invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

## DETAILED DESCRIPTION OF THE PRESENT INVENTION

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention.

In an optical receiver, the timing recovery circuit (TR) typically samples the received signal at a specific sampling phase within one unit (symbol) interval (UI). This sampling phase is generally suboptimal and may even provide extremely bad performance. Thus, one of the major challenges in designing a MLSE optical receiver is to optimize sampling phase.

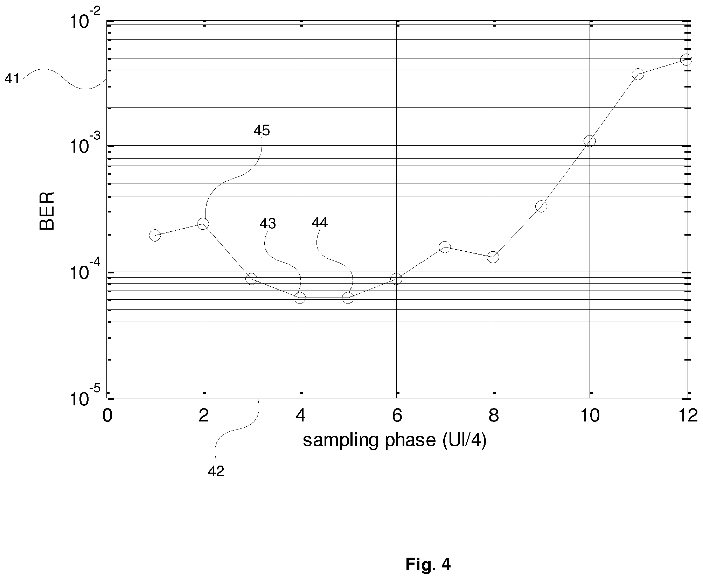

In Fig. 4, graphical results are shown of a simulation conducted by the Applicant of the use of an MLSE equalizer including a BMCU to compensate for ISI in a CD distorted channel. The graph plots bit error rate (BER) in y-axis 41 against sampling phase in x-axis 42. In the simulation, the sampling phase was varied over 3 UI in step of UI/4 (12 estimations). From the graph, it may be appreciated that sampling phase 4 and 5 provide the best BER performance of approximately $6 \times 10^{-5}$, as indicated by markers 43 and 44, respectively. However, it was found during the simulation that in blind mode, the sampling phase and starting channel model may be locked at position 2, shown by marker 45, with $BER = 2.5 \times 10^{-4}$ which may be considered suboptimum.

Methods exist for selecting sampling phases. For example, the sampling phases may first be scanned to obtain information from FEC about input errors, and then the sampling phase providing the minimum number of errors may be selected. Nevertheless, use of this method may be problematic as firstly, it requires that FEC exists; secondly, scanning over large sampling phase regions may cause traffic interruption and poor BER performance; and thirdly, the channel may change so that the searching algorithm is required to periodically check the sampling phase, which again may cause traffic interruption and poor BER performance.

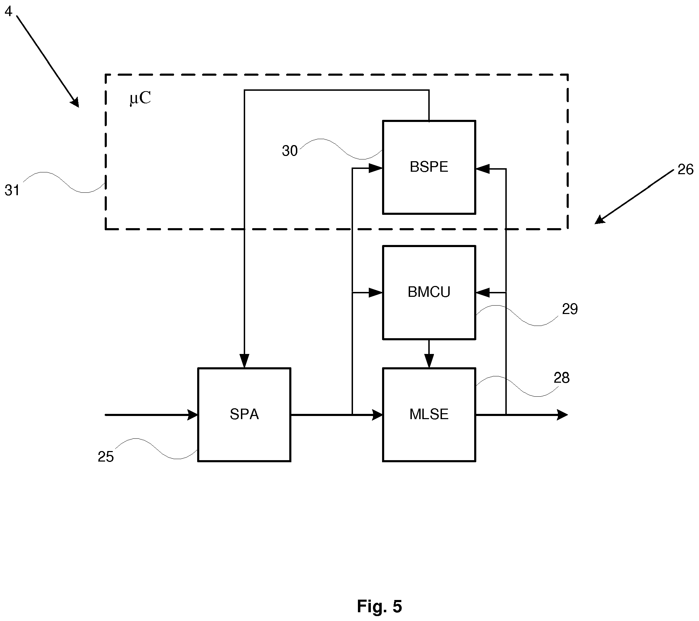

Reference is now made to Fig. 5 which schematically illustrates a section of optical receiver 4 shown in Fig. 3, and including SPA 25 and equalization circuitry 26 suitable for determining and selecting an optimal sampling phase, according to an embodiment of the present invention. Equalization circuitry 26 may include an enhanced equalizer such as, for example, MLSE 28, and may additionally include BMCU 29, and best sampling phase estimator (BSPE) 30. In some embodiments, interpolator, e.g. the BSPE 30, may be implemented in a microcontroller 31 physically separate from equalization circuitry 26.

BSPE 30 may adjust a sampling phase of data input to MLSE 28 and may estimate for each adjusted sampling phase a SPQI. The SPQI may be calculated using the interpolated samples from the input data with adjusted sampling phase and MLSE decoded bits.

Following is a description of an exemplary process of BSPE 30 estimating of SQPI, and which includes branch metric calculations performed using BMCU 29 according to an embodiment of the present invention. The metric calculations may be mean-value based (e.g. Euclidean distances) or histogram based, or may include use of other suitable branch metric calculation methods.

It may first be assumed that the MLSE equalizes a binary signal (two levels) and that the channel memory is K. Therefore, the MLSE may work on a trellis with $2^K$ states. In total, $2^{K+1}$ branch metrics may be calculated as there are $2^{K+1}$ different binary combinations. For a Euclidian distance-based MLSE the channel model may include $2^{K+1}$ values. For a histogram-based MLSE, the channel model may include $2^{K+1}$ histograms. Whichever method is used, the available information should be suitable for calculating a mean value of each conditioned (conditional) pdf (related to certain bit sequence of length $K+1$).

A sequence of $K+1$ bits that describe an $i$th branch may be denoted by $\mathbf{s}_i = (S_{1,i}, S_{2,i}, S_{3,i}, ..., S_{K+1}, i)$, i=1,2,..., $2^{K+1}$. For each $\mathbf{s}_i$ samples $S(\mathbf{s}_i)$ related to the bit combination may be collected and used to calculate a mean value $MS(\mathbf{s}_i)$, as follows:

$$MS(\mathbf{s}_i) = \overline{S(\mathbf{s}_i)} \qquad (1)$$

Use of BSPE 30 estimating may be applicable in MLSE equalizers with arbitrary number of samples per symbol. Due to complexity, maximum two samples per symbol are used in practical systems. One sample per symbol may also be used but it may yield suboptimum performance, and may be more sensitive to sampling phase variations and jitter. The symbols may be quantized.

If the MLSE uses two samples, two MS values may be calculated for two sampling phases;

$$MS_1(\mathbf{s}_i) = \overline{S_1(\mathbf{s}_i)} \qquad (2)$$
$$MS_2(\mathbf{s}_i) = \overline{S_2(\mathbf{s}_i)}$$

Next is to calculate the mean value of MS;

$$MMS_1 = \overline{MS_1(\mathbf{s}_i)} \qquad (3)$$
$$MMS_2 = \overline{MS_2(\mathbf{s}_i)}$$

and finally to calculate the variance of MMS (no normalization by $2^{K+1}$ is required);:

$$VMMS_1 = \sum_{i=1}^{2^{K+1}} \left(MMS_1 - MS_1(\mathbf{s}_i)\right)^2 \qquad (4)$$
$$VMMS_2 = \sum_{i=1}^{2^{K+1}} \left(MMS_2 - MS_2(\mathbf{s}_i)\right)^2$$

The values of VMMS may be stored in vectors $V_1$ and $V_2$ for each tested sampling phase. For $M$ sampling phases in one UI (UI/M step) and $N$ UIs, $MxN$ sampling phases are obtained and so are the same number of vector elements;

$$V_1 = \left( p_{1,1}, p_{1,2}, p_{1,3}, \ldots p_{1,M}, \ldots, p_{N,1}, p_{N,2}, p_{N,3}, \ldots p_{N,M} \right), \quad p=\text{VMMS}_1 \tag{5}$$

$$V_2 = \left( q_{1,1}, q_{1,2}, q_{1,3}, \ldots q_{1,M}, \ldots, q_{N,1}, q_{N,2}, q_{N,3}, \ldots q_{N,M} \right), \quad q=\text{VMMS}_2$$

For one sample per symbol, the SPQI may be calculated at the considered sampling phase as;

$$V = \left( p_{1,1}, p_{1,2}, p_{1,3}, \ldots p_{1,M}, \ldots, p_{N,1}, p_{N,2}, p_{N,3}, \ldots p_{N,M} \right), \quad p=\text{VMMS} \tag{6}$$

The SPQI vector for one sample per symbol may then be calculated as;

$$SPQI = V \tag{7}$$

and for two samples per symbol as;

$$SPQI = \left( \sqrt{V_1} + \sqrt{V_2} \right)^2 \tag{8}$$

The optimal sampling phase may be indicated by the highest SPQI value.

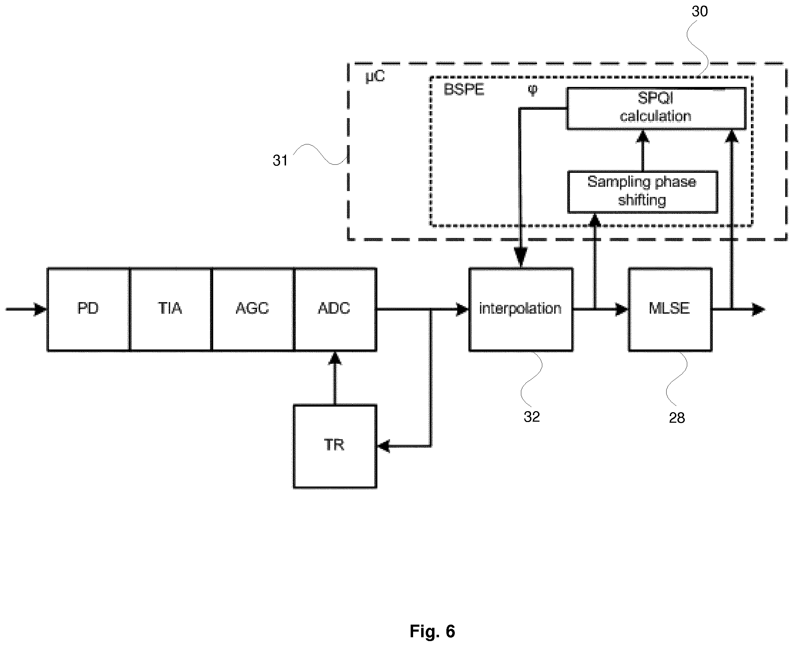

Reference is now made to Fig. 6 which schematically illustrates a further implementation of the BSPE 30. The BSPE 30 may be implemented in a microcontroller 31 physically separate from equalization circuitry 26. SPQI calculation can be done at low speed using microcontroller 31. Data blocks are periodically loaded to µC. For each block, MS value is calculated and added to the previously stored value (accumulation). This is done at several sampling phases. Sampling phase is adjusted using an interpolator (e.g. cubic spline interpolation). After several blocks (e.g. in total 30000 symbols) all MS values are supposed to be reliable. Next step is calculating MMS, VMMS, and V values. Last step is calculating SPQI vector and selecting the best sampling phase φ. The information of the best sampling phase is send to the interpolator 32 that interpolates the ADC output samples at the target sampling phase φ. Sampling phase is not often updated since channel condition variations should not significantly change the best sampling phase.

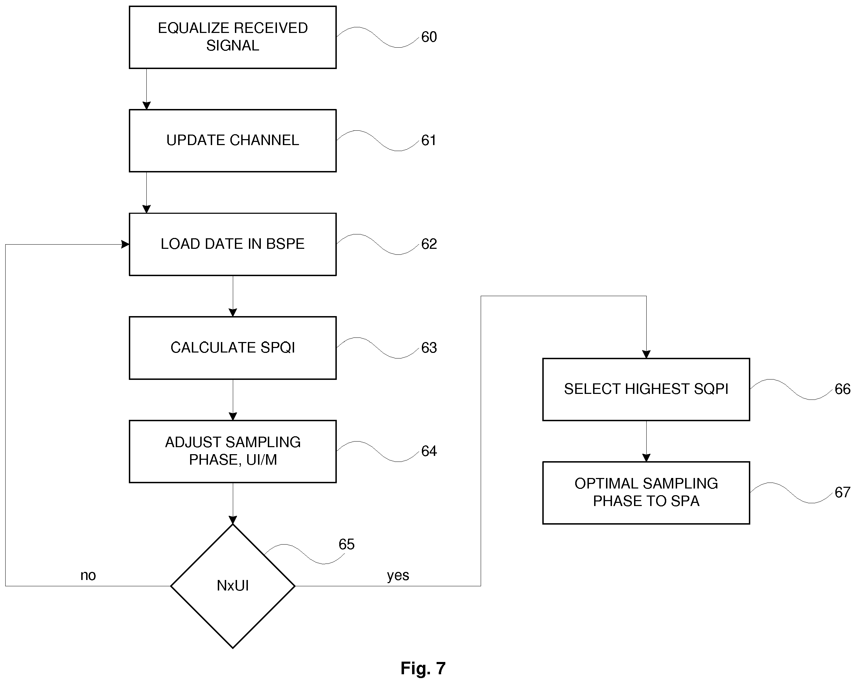

Reference is now made to Fig. 7 which is a flow chart of a method for selecting the optimal sampling phase using MLSE 28, BMCU 29, and BSPE 30, according to an embodiment of the present invention. The skilled person may realize that the method described herein is for exemplary purposes, and that it may be practiced with more or less steps, and/or with a different sequence of steps.

At 60, MLSE 28 may use either a starting channel model or training sequences to equalize a received signal.

At 61, the channel may be updated several times using BMCU 29 and MLSE 28.

At 62, BSPE 30 may load sampling phase data in the input data to MLSE 28, and may load the metrically decoded data output from the MLSE. The sampling phase data may be loaded into BSPE 30 in data blocks of $2^{15}$ samples or less depending on parameter $K$. Normally, if random data are sent only 100 observations per branch are enough for accurate mean value estimations. For example, for $K$=5 there are 64 branches and only 6400 samples are required.

At 63, BSPE 30 calculates the SPQI for the loaded data. In determining the SPQI, the MS value may be determined for the loaded block, and may be added (accumulated) to previously stored MS values for previously loaded blocks. Additionally computed may be MMS, VMMS, and V values associated with the sampling phase.

At 64, BSPE 30 may adjust the sampling phase of the MLSE input data from ADC 23 by a step UI/M. An interpolator may be used to adjust the sampling phase and may be included in SPA 25. The interpolator may use cubic spine interpolation among other suitable interpolation techniques.

At 65, BSPE 30 or micro controller 31 may check if sampling data has been loaded for each UI/M step over N UIs. For example, sampling data loaded in UI/M steps over N UIs may represent several blocks totaling approximately 30,000 symbols. If not, return to step 62. If yes, continue to step 65.

At 66, BSPE 30 may select the sampling phase with the highest SPQI. This sampling phase may be associated with being the optimal sampling phase.

At 67, BSPE 30 forwards to the interpolator in SPA 25 data associated with the optimal sampling phase. The data may serve to adjust the sampling phase of ADC 23 output data to MLSE 28 to the optimal sampling phase. Changing of the sampling phase may be performed at low speed since variations in channel conditions should not be expected to significantly affect the optimal sampling phase.

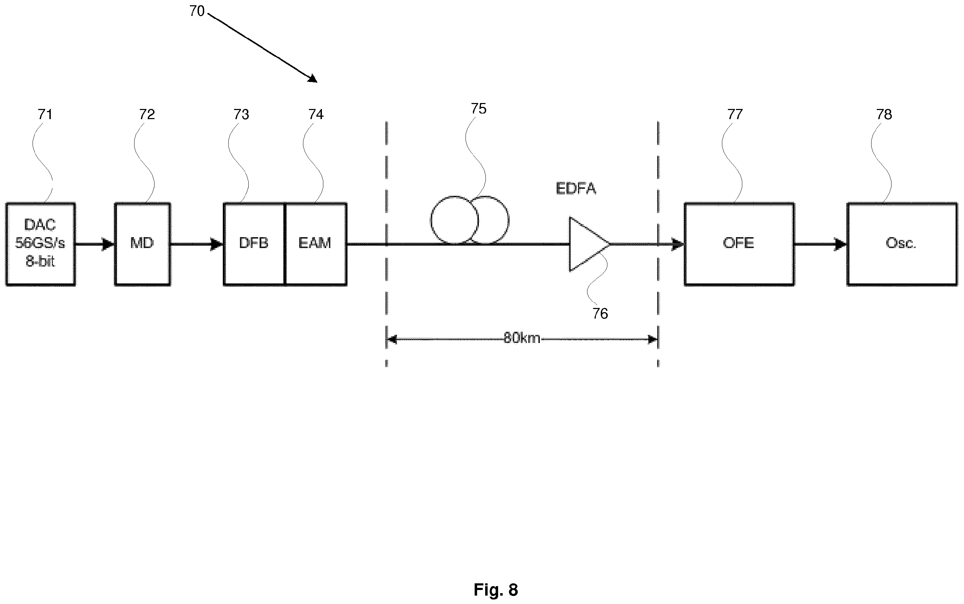

The Applicant conducted tests with signals received over an 80 km CD uncompensated optical link. Fig. 8 schematically illustrates a block diagram of an optical transmission system 70 test set-up, according to an embodiment of the present invention. Optical transmission system 70 included a 56 G/s 8-bit resolution DAC (digital to analog converter) 71, a MD 72, a DFB 73, an EAM 74, 80 km optical fiber link 75, an EDFA 76, an OFE 77, and an oscilloscope 78.

A 28 Gb/s electrical signal was generated using DAC 71. The transmitter generated an OOK optical signal with a bandwidth of approximately 10GHz. The signal was sent over 80km link 75 which included one EDFA 76. EDFA 76 was used to adjust the input optical power to -10dBm. After receiving the optical signal, data was captured by oscilloscope 78 and processed off-line using a PC. The measured CD was around 1300 ps/nm.

A 64-state MLSE and a 16-state MLSE, each with one sample per symbol and two samples per symbol, were simulated. The results presented in the following graphs plotting SPQI vs. sampling phase and BER vs. sampling phase and shown in Figures 8 to 15, demonstrate the validity of the proposed method. Differences between the optimal sampling phase shown in the graphs SPQI vs. sampling phase and that in the graphs showing BER vs. sampling phase are relatively minor, if not negligible. Nevertheless, as jitter may cause variations in the sampling phase, use of SPQI as the selection parameter instead of BER may be preferable.

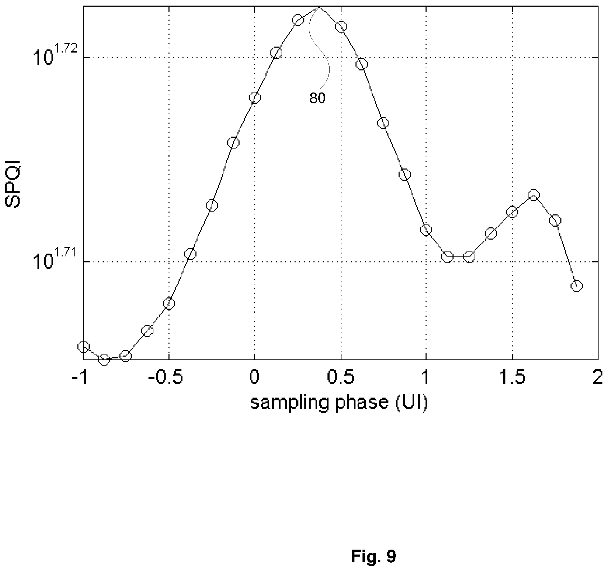

Reference is now made to Figures 8 and 9 which shows the graph of SPQI vs. sampling phase and BER vs. sampling phase for the 64-state MLSE with one sample per symbol, respectively, according to an embodiment of the present invention. Adjustments to the sampling phase are made in steps M of UI/8.

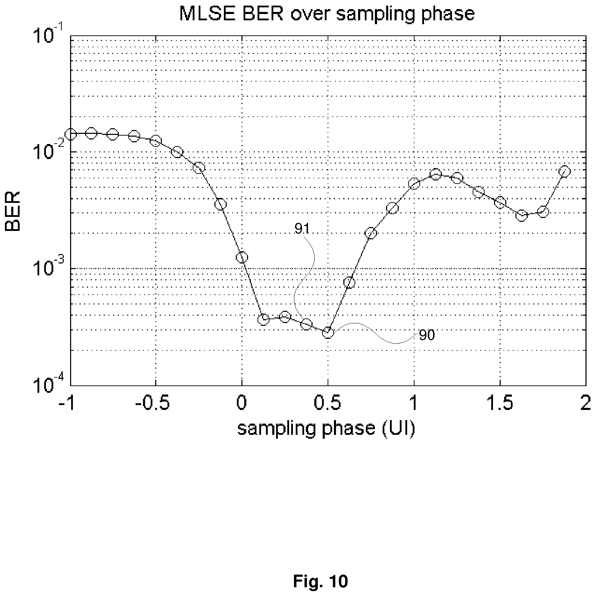

In Fig. 9, it may be appreciated that the highest SPQI is obtained for the sampling phase when UI is 0.375, shown by SPQI marker 80. In Fig. 10, it may be appreciated that the lowest BER is achieved for the sampling phase when UI = 0.5, shown by BER marker 90, although there is not a large difference when compared to the BER when UI = 0.375, shown by BER marker 91. As jitter may affect the sampling phase and thereby the BER, and the difference in BER between BER markers 90 and 91 is not substantial, it may be preferable to rely on the graph shown in Fig. 9 and to select the sampling phase associated with SPQI marker 80.

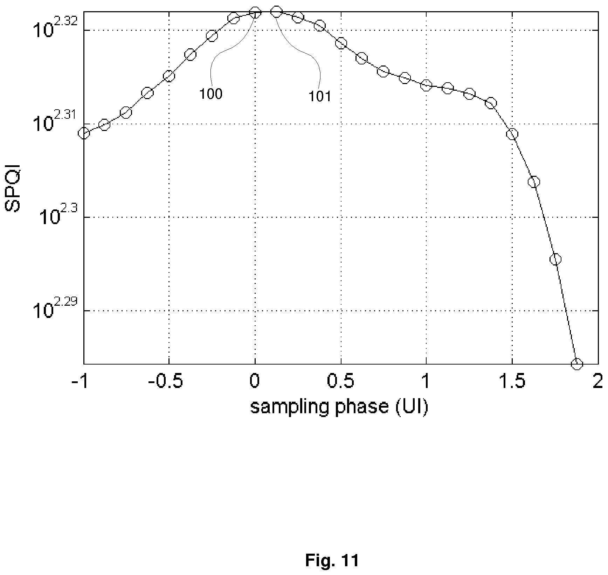

Reference is now made to Figures 10 and 11 which shows the graph of SPQI vs. sampling phase and BER vs. sampling phase for the 64-state MLSE with two samples per symbol, respectively, according to an embodiment of the present invention. Adjustments to the sampling phase are made in steps M of UI/8.

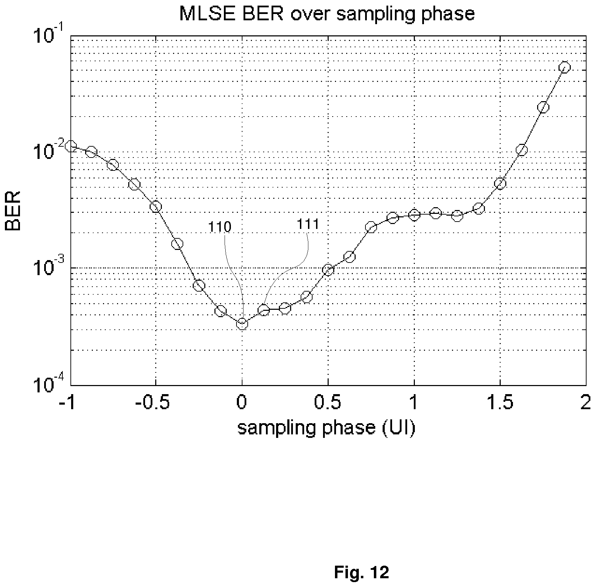

In Fig. 11, it may be appreciated that the highest SPQI is obtained for the sampling phase when UI is 0 and also for the sampling phase when UI is 0.125, as shown by SPQI markers 100 and 101 respectively. In Fig. 12, it may be appreciated that the lowest BER is achieved for the sampling phase when UI = 0, shown by BER marker 110. As the lowest BER is for the sampling phase when UI = 0 and is somewhat greater for the sampling phase when UI = 0.125, shown by BER marker 111, it may be preferable to select the sampling phase associated with SPQI marker 100 which corresponds with that of BER marker 110 indicative of the lowest BER.

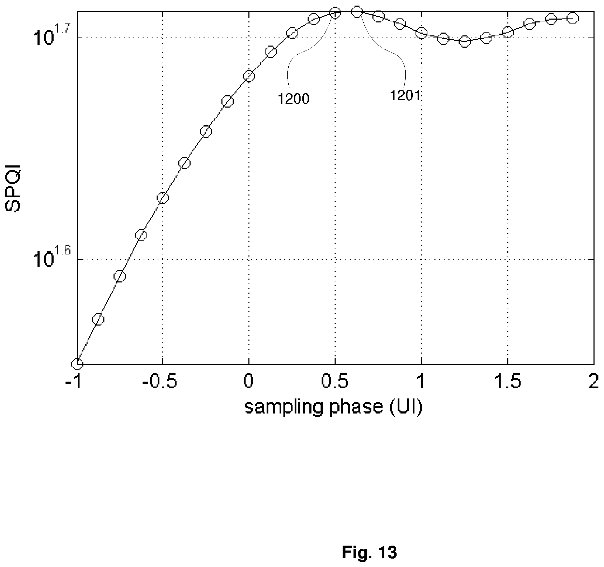

Reference is now made to Figures 12 and 13 which shows the graph of SPQI vs. sampling phase and BER vs. sampling phase for the 16-state MLSE with one sample per symbol, respectively, according to an embodiment of the present invention. Adjustments to the sampling phase are made in steps M of UI/8.

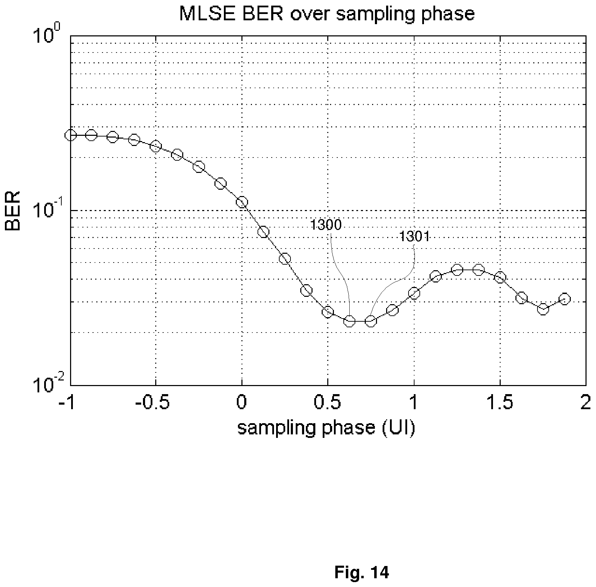

In Fig. 13, it may be appreciated that the highest SPQI is obtained for the sampling phase when UI is 0.5 and also for the sampling phase when UI is 0.625, as shown by SPQI markers 120 and 121 respectively. In Fig. 14, it may be appreciated that the lowest BER is achieved for the sampling phase when UI = 0.625, shown by BER marker 130, and also for the sampling phase when UI is 0.750, shown by BER marker 131. As jitter may affect the sampling phase and thereby the BER, it may be preferable to select the sampling phase associated with SPQI marker 1201 which corresponds with that of BER marker 1300 indicative of the lowest BER.

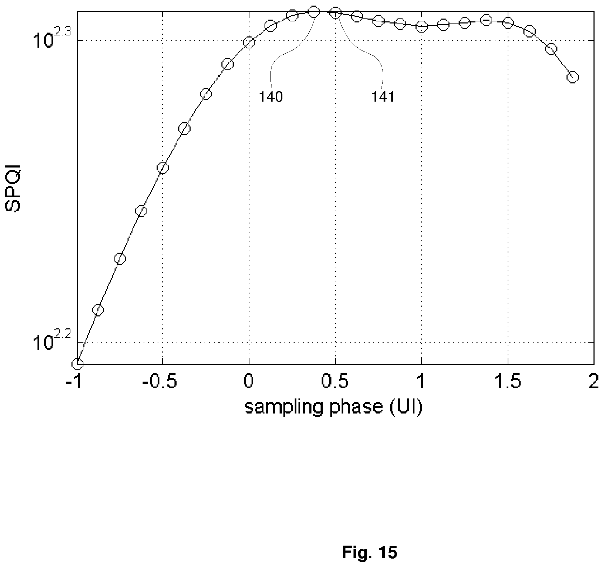

Reference is now made to Figures 14 and 15 which shows the graph of SPQI vs. sampling phase and BER vs. sampling phase for the 16-state MLSE with two samples per symbol, respectively, according to an embodiment of the present invention. Adjustments to the sampling phase are made in steps M of UI/8.

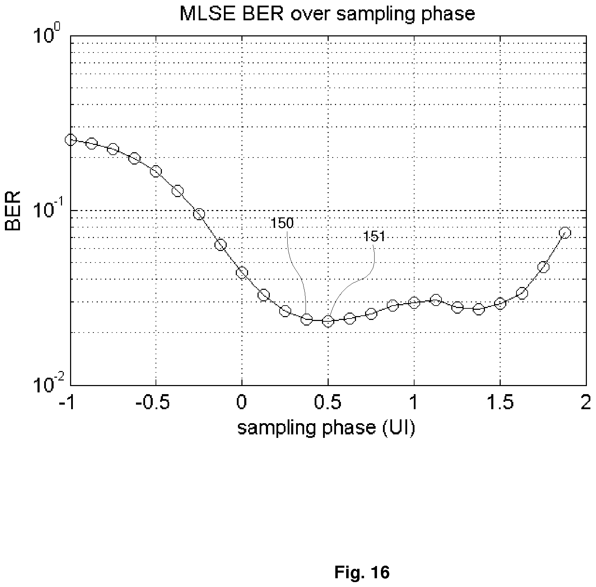

In Fig. 15, it may be appreciated that the highest SPQI is obtained for the sampling phase when UI is 0.375 and also for the sampling phase when UI is 0.500, as shown by SPQI markers 140 and 141 respectively. In Fig. 16, it may be appreciated that the lowest BER is achieved for the sampling phase when UI = 0.375, shown by BER marker 150, and also for the sampling phase when UI is 0.500, shown by BER marker 151. As the highest SPQI and the lowest BER correspond to the same sampling phases in both graphs at UI = 0.375 and UI = 0.500, either the sampling phase at UI = 0.375 or at UI = 0.500 may be selected as the optimal sampling phase.

Unless specifically stated otherwise, as apparent from the preceding discussions, it is appreciated that, throughout the specification, discussions utilizing terms such as "processing," "computing," "calculating," "determining," or the like, refer to the action and/or processes of a computer, computing system, or similar electronic computing device that manipulates and/or transforms data represented as physical, such as electronic, quantities within the computing system's registers and/or memories into other data similarly represented as physical quantities within the computing system's memories, registers or other such information storage, transmission or display devices.

Embodiments of the present invention may include apparatus for performing the operations herein. This apparatus may be specially constructed for the desired purposes, or it may comprise a general-purpose computer selectively activated or reconfigured by a computer program stored in the computer. Such a computer program may be stored in a computer readable storage medium, such as, but not limited to, any type of disk, including floppy disks, optical disks, magnetic-optical disks, read-only memories (ROMs), compact disc read-only memories (CD-ROMs), random access memories (RAMs), electrically programmable read-only memories (EPROMs), electrically erasable and programmable read only memories (EEPROMs), magnetic or optical cards, Flash memory, or any other type of media suitable for storing electronic instructions and capable of being coupled to a computer system bus.

The processes and displays presented herein are not inherently related to any particular computer or other apparatus. Various general-purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the invention as described herein.

While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the invention.

## Claims

1. A method of selecting a sampling phase in an optical receiver, the method comprising:

   estimating a plurality of sampling phase quality indicator, SPQI, values for a plurality of adjusted sampling phases within one or more unit intervals in a received signal;
   selecting (66) the sampling phase corresponding to the SPQI with the highest value of said plurality of SPQI values;
   equalizing said received signal; and
   adjusting a sampling phase of said received signal based on the selected sampling phase.

2. A method according to claim 1 further comprising using maximum likelihood sequence estimating to equalize said received signal.

3. A method according to claim 1 further comprising sampling said received signal using at least one sample per symbol.

4. A method according to claim 1 further comprising performing branch metric calculations on said equalized signal.

5. A method according to claim 4 wherein said branch metric calculations comprise any one of mean-value based calculations or histogram based calculations.

6. A method according to claim 3 further comprising calculating a mean value for said received signal for each sampling phase of said plurality of adjusted sampling phases.

7. A method according to claim 1 further comprising using interpolation to adjust (64) each sampling phase in said plurality of adjusted sampling phases.

8. An equalization circuit for use in an optical receiver comprising:

   an equalizer adapted to equalize a received signal;
   a best sampling phase estimator, BSPE, (30) adapted to estimate a plurality of sampling phase quality indicator, SPQI, values for a plurality of adjusted sampling phases within one or more unit intervals in said received signal, and to select the sampling phase corresponding to the SPQI with the highest value of said plurality of SPQI values; and
   a sampling phase adjustment circuit (25) adapted to adjust a sampling phase of said received signal based on the selected sampling phase.

9. An equalization circuit according to claim 8 wherein said equalizer is adapted to perform maximum likelihood sequence estimating, MLSE, to equalize said signal.

10. An equalization circuit according to claim 8 or 9 wherein said equalizer is adapted to sample said received signal using at least one sample per symbol.

**11.** An equalization circuit according to any one of claims 8-10 further comprising a branch metrics calculation unit, BMCU, (29) adapted to calculate metrics in said equalized signal.

**12.** An equalization circuit according to any one of claims 8-11 wherein said BSPE (30) is adapted to output a signal to a sampling phase adjustment circuit (25) to adjust a sampling phase of said received signal over said plurality of adjusted sampling phases.

**13.** An equalization circuit according to any one of claims 8-12 wherein said BSPE (30) is adapted to calculate a mean value for said received signal for each sampling phase of said plurality of adjusted sampling phases.

**Patentansprüche**

**1.** Verfahren zum Auswählen einer Abtastphase in einem optischen Empfänger, wobei das Verfahren aufweist:

Abschätzen von mehreren Abtastphasenqualitätsindikator- SPQI -Werten für mehrere angepasste Abtastphasen innerhalb von einem oder mehreren Einheitsintervallen in einem empfangenen Signal;
Auswählen (66) der Abtastphase, die dem SPQI mit dem höchsten Wert der mehreren SPQI-Werte entspricht;
Entzerren des empfangenen Signals; und
Anpassen einer Abtastphase des empfangenen Signals basierend auf der ausgewählten Abtastphase.

**2.** Verfahren nach Anspruch 1, ferner aufweisend das Verwenden von Maximum-Likelihood-Schätzen, um das empfangene Signal zu entzerren.

**3.** Verfahren nach Anspruch 1, ferner aufweisend das Abtasten des empfangenen Signals unter Verwendung von mindestens einem Sample pro Symbol.

**4.** Verfahren nach Anspruch 1, ferner aufweisend das Ausführen von Zweigmetrikberechnungen an dem entzerrten Signal.

**5.** Verfahren nach Anspruch 4, wobei die Zweigmetrikberechnungen irgendwelche von durchschnittswertbasierten Berechnungen oder histogrammbasierten Berechnungen aufweisen.

**6.** Verfahren nach Anspruch 3, ferner aufweisend das Berechnen eines Durchschnittswertes für das empfangene Signal für jede Abtastphase der mehreren angepassten Abtastphasen.

**7.** Verfahren nach Anspruch 1, ferner aufweisend das Verwenden von Interpolation, um jede Abtastphase in den mehreren angepassten Abtastphasen anzupassen (64).

**8.** Entzerrungsschaltung zur Verwendung in einem optischen Empfänger; aufweisend:

einen Entzerrer, der angepasst ist, ein empfangenes Signal zu entzerren;
ein Beste-Abtastphase-Abschätzer BSPE (30), der angepasst ist, mehrere Abtastphasenqualitätsindikator- SPQI -Werte für mehrere angepasste Abtastphasen innerhalb von einem oder mehreren Einheitsintervallen in dem empfangenen Signal abzuschätzen und die Abtastphase auszuwählen, die dem SPQI mit dem höchsten Wert der mehreren SPQI-Werte entspricht; und
eine Abtastphasenanpassungsschaltung (25) die angepasst ist, eine Abtastphase des empfangenen Signals basierend auf der ausgewählten Abtastphase anzupassen.

**9.** Entzerrungsschaltung nach Anspruch 8, wobei der Equalizer angepasst ist, Maximum-Likelihood-Schätzen MLSE auszuführen, um das Signal zu entzerren.

**10.** Entzerrungsschaltung nach Anspruch 8 oder 9, wobei der Equalizer angepasst ist, das empfangene Signal unter Verwendung von mindestens einem Sample pro Symbol zu abzutasten.

**11.** Entzerrungsschaltung nach einem der Ansprüche 8 bis 10, ferner aufweisend eine Zweigmetrikberechnungseinheit BMCU (29), die angepasst ist, Metriken in dem entzerrten Signal zu berechnen.

**12.** Entzerrungsschaltung nach einem der Ansprüche 8 bis 11, wobei der BSPE (30) angepasst ist, ein Signal an eine Abtastphasenanpassungsschaltung (25) auszugeben, um eine Abtastphase des empfangenen Signals über die mehreren angepassten Abtastphasen anzupassen.

**13.** Entzerrungsschaltung nach einem der Ansprüche 8 bis 12, wobei der BSPE (30) angepasst ist, einen Durchschnittswert für das empfangene Signal für jede Abtastphase der mehreren angepassten Abtastphasen zu berechnen.

**Revendications**

**1.** Procédé de sélection d'une phase d'échantillonnage dans un récepteur optique, le procédé comprenant :

l'estimation d'une pluralité de valeurs d'indicateur de qualité de phase d'échantillonnage, SPQI, pour une pluralité de phases d'échantillonnage ajustées dans un ou plusieurs intervalles unitaires dans un signal reçu ;
la sélection (66) de la phase d'échantillonnage correspondant au SPQI ayant la valeur la plus élevée de ladite pluralité de valeurs de SPQI ;
l'égalisation dudit signal reçu ; et
l'ajustement d'une phase d'échantillonnage dudit signal reçu sur la base de la phase d'échantillonnage sélectionnée.

**2.** Procédé selon la revendication 1, comprenant en outre l'utilisation d'une estimation de séquence de vraisemblance maximale pour égaliser ledit signal reçu.

**3.** Procédé selon la revendication 1, comprenant en outre l'échantillonnage dudit signal reçu à l'aide d'au moins un échantillon par symbole.

**4.** Procédé selon la revendication 1, comprenant en outre la réalisation de calculs de métriques de branche sur ledit signal égalisé.

**5.** Procédé selon la revendication 4, lesdits calculs de métriques de branche comprenant l'un quelconque de calculs à base de valeur moyenne ou de calculs basés sur un histogramme.

**6.** Procédé selon la revendication 3, comprenant en outre le calcul d'une valeur moyenne pour ledit signal reçu pour chaque phase d'échantillonnage de ladite pluralité de phases d'échantillonnage ajustées.

**7.** Procédé selon la revendication 1, comprenant en outre l'utilisation d'une interpolation pour ajuster (64) chaque phase d'échantillonnage dans ladite pluralité de phases d'échantillonnage ajustées.

**8.** Circuit d'égalisation destiné à être utilisé dans un récepteur optique comprenant :

un égaliseur adapté pour égaliser un signal reçu ;
un estimateur de meilleure phase d'échantillonnage, BSPE, (30) adapté pour estimer une pluralité de valeurs d'indicateur de qualité de phase d'échantillonnage, SPQI, pour une pluralité de phases d'échantillonnage ajustées dans un ou plusieurs intervalles unitaires dans ledit signal reçu, et pour sélectionner la phase d'échantillonnage correspondant au SPQI ayant la valeur la plus élevée de ladite pluralité de valeurs de SPQI ; et
un circuit d'ajustement de phase d'échantillonnage (25) adapté pour ajuster une phase d'échantillonnage dudit signal reçu sur la base de la phase d'échantillonnage sélectionnée.

**9.** Circuit d'égalisation selon la revendication 8, ledit égaliseur étant adapté pour réaliser une estimation de séquence de probabilité maximale, MLSE, pour égaliser ledit signal.

**10.** Circuit d'égalisation selon la revendication 8 ou 9, ledit égaliseur étant adapté pour échantillonner ledit signal reçu à l'aide d'au moins un échantillon par symbole.

**11.** Circuit d'égalisation selon l'une quelconque des revendications 8 à 10, comprenant en outre une unité de calcul de métriques de branche, BMCU, (29) adaptée pour calculer des métriques dans ledit signal égalisé.

**12.** Circuit d'égalisation selon l'une quelconque des revendications 8 à 11, ledit BSPE (30) étant adapté pour délivrer un signal à un circuit d'ajustement de phase d'échantillonnage (25) pour ajuster une phase d'échantillonnage dudit signal reçu sur ladite pluralité de phases d'échantillonnage ajustées.

13. Circuit d'égalisation selon l'une quelconque des revendications 8 à 12, ledit BSPE (30) étant adapté pour calculer une valeur moyenne pour ledit signal reçu pour chaque phase d'échantillonnage de ladite pluralité de phases d'échantillonnage ajustées.

PRIOR ART

Fig. 1

**PRIOR ART**

**Fig. 2**

PRIOR ART

Fig. 3

**Fig. 4**

EP 3 248 307 B1

Fig. 5

Fig. 6

Fig. 7

60 — EQUALIZE RECEIVED SIGNAL

61 — UPDATE CHANNEL

62 — LOAD DATE IN BSPE

63 — CALCULATE SPQI

64 — ADJUST SAMPLING PHASE, UI/M

65 — NxUI — no / yes

66 — SELECT HIGHEST SQPI

67 — OPTIMAL SAMPLING PHASE TO SPA

Fig. 8

EP 3 248 307 B1

Fig. 9

MLSE BER over sampling phase

Fig. 10

Fig. 11

MLSE BER over sampling phase

Fig. 12

**Fig. 13**

EP 3 248 307 B1

**Fig. 14**

EP 3 248 307 B1

**Fig. 15**

**Fig. 16**

EP 3 248 307 B1

**EP 3 248 307 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8068572 B

- EP 1443697 A1